# EUROPEAN PATENT SPECIFICATION

(11) **EP 0 465 039 B1**
(45) Date of publication and mention of the grant of the patent: **25.01.1995**
(21) Application number: 91305423.5
(22) Date of filing: 14.06.1991
(51) Int. Cl.: C09D 11/00

(54) **Ink composition**
Tintenzusammensetzung
Composition d'encre

(30) Priority: 27.06.1990 GB 9014299
(43) Date of publication of application: 08.01.1992
(73) Proprietor: DOMINO PRINTING SCIENCES PLC, Cambridge CB3 8TU (GB)
(72) Inventor: Marshall, Allan Craig, Grantham, Lincs. NG31 8PF (GB); Hudd, Alan Lionel, Nuthampstead, Herts. SG8 8NG (GB)
(74) Representative: Kearney, Kevin David Nicholas

(56) References cited:
- US-A- 4 303 924

## Description

### Field of the Invention

This invention relates to ink-jet inks.

### Background of the Invention

Ink-jet printing is a technique which puts a number of constraints on the nature of the ink which is used. These constraints include low viscosity (usually less than 10 cP at 25°C), sufficient surface tension that the jet can produce the necessary large number of small droplets, and sufficient conductivity that the droplets can be directed as desired onto a substrate to be printed. The ink must be a homogeneous liquid capable of rapid conversion to a dry printed area on the substrate.

Hitherto, these constraints have been satisfactorily met by the use of ink-jet inks comprising a binder, a colourant, a conductive component and, as a major component of the liquid phase, low molecular weight organic solvents. In order to obtain the desired combination of solubility and drying characteristics, a mixture of several solvents may be used but, in order to achieve rapid drying, they are highly flammable, volatile solvents such as methyl ethyl ketone and ethanol.

Known ink-jet inks may be UV-curable. For example, the binder component is a pre-polymer, usually of high functionality.

US-A-4303924 discloses a radiation-curable ink-jet ink comprising, in addition to a colourant and a conductive component, 0 to 90% of monofunctional polymerisable monomer and 5 to 80% of multifunctional polymerisable monomer. The colourant is a dye. The conductive component is oil-soluble. It is indicated that there may be 0% organic solvent, but all the given Examples contain more than 10% of such a solvent which, together with the high content of trifunctional monomer, provides a liquid phase in which the conductive component is soluble. If solvent were absent, it is unlikely that the viscosity of the ink would be sufficiently low for ink-jet printing. The ink must apparently be used in an inert gas atmosphere, which is a considerable disadvantage.

An object behind the present invention has been to provide an ink-jet ink which meets the given constraints but which avoids the use of volatile, flammable, environmentally-undesirable solvents, and can be used in air.

### Summary of the Invention

An ink-jet ink according to the present invention comprises a colourant, a polar conductive component and, as the major component of at least the liquid phase, one or more polymerisable monomers in which the conductive component is soluble. Further, the ink is free of volatile organic solvent.

An ink of the invention has a number of desirable characteristics and advantages, which are summarised below. Perhaps most importantly, inks of the invention are suitable for all types of ink-jet printing, based on non-volatile monomer molecules. Such monomer molecules are thermally-stable, non-flammable, low viscosity liquids and exhibit low odour and low toxicity. These liquids are designed to replace all traditional volatile solvents and binders used in known ink-jet formulations. The ink may also be designed with these or a range of solvents and binders.

### Description of the Invention

An ink-jet formulation of the invention will usually comprise mixtures of monomers possessing different degrees of functionality, including combinations of mono, di, tri and higher functionality material. Such materials are capable of being cured by the application of UV irradiation, for which purpose the formulation may contain a photoinitiator and/or a photoactivator. Further, in addition to a colourant and a conductive component, the formulation may comprise conventional ingredients such as stabilisers, surfactants and wetting agents.

In a continuous ink-jet printer, the unused solvent-free ink can be recycled, and remains stable to heat, moisture and oxidation. Upon printing, the droplet of ink is delivered to the substrate surface and converted to a dry film or dot by polymerising the monomer molecules by the action of an external energy source, adjacent to the printer, focused on the printing area. As an example, the external energy source may be a UV light source. The UV light source initiates the polymerisation process, which typically takes less than 5 msec. The preferred choice of light source emits UV-A light only, e.g. at a wavelength of 315-400 nm, eliminating the need for extraction due to the production of ozone found with UV-B or UV-C light sources.

The choice of materials is wide and will depend on the application and properties required. As a means to highlight the principle, an ink-jet formulation may be designed to provide high solvent resistance by incorporating a relatively large proportion of higher functional monomer, thus producing, once cured, a highly cross-linked insoluble film.

A range of commercial monomers, e.g. having acrylic, vinyl or epoxy functional groups, photoinitiators and photoactivators is available and suitable for use in an ink-jet formulation, capable of polymerisation by UV light. The reaction may proceed through addition polymerisation; all reactants are converted to the final polymeric binder, leaving no by-product or trace of liquid. This reaction can proceed in two ways, either by a free-radical mechanism or by the formation of a cationic species.

Suitable monofunctional monomers that cure by a free-radical mechanism include vinyl compounds and (meth)acrylic acid esters. Specific examples are octyl acrylate, decyl acrylate, nonylphenol ethoxylate acrylate, N-vinylpyrollidone, ethyl diglycol acrylate, isobornyl acrylate, ethylhexyl acrylate, lauryl acrylate, butanediol monoacrylate, b-carboxyethyl acrylate, isobutyl acrylate, polypropylene glycol monomethacrylate and 2-hydroxyethyl methacrylate.

Suitable monofunctional monomers that cure by a cationic mechanism include vinyl ethers, monofunctional cycloaliphatic epoxides, α-epoxides and isodecyl glycidyl ether.

It is preferred that some monofunctional monomer is present in the novel ink, since such materials will solubilise polar conductive materials, and have low viscosity. However, such materials will not usually be the sole polymerisable component, since some cross-linking is desirable, in order that polymerisation leads rapidly to a dry ink. The amount of monofunctional monomer in the formulation may be up to 70%, e.g. 25 to 60%, by weight.

In order to provide a balance of properties, the novel ink will almost invariably include some difunctional material, e.g. in an amount of up to 70%, preferably 20 to 60%, more preferably 30 to 50%, by weight of the formulation. Lower difunctional monomer contents are associated with longer ink drying times.

Suitable difunctional monomers that cure by a free-radical mechanism include difunctional (meth)acrylic acid esters, e.g. hexanediol di(meth)acrylate, tetraethylene glycol diacrylate, tripropylene glycol diacrylate, butanediol diacrylate, polyethylene glycol diacrylates and triethylene glycol dimethacrylate. Suitable difunctional monomers that cure by a cationic mechanism include triethylene glycol divinyl ether, 1,4-cyclohexanedimethanol divinyl ether, butanediol diglycidyl ether and difunctional cycloaliphatic epoxide resins.

Trifunctional monomers which may used in the invention include ethoxylated trimethylolpropane triacrylate. If present (for the reasons given above), tri- or higher functional components will usually comprise up to 10% by weight of the formulation.

Di- and higher-functional monomers are not usually solvents for the polar conductive component. The lower functional monomers comprise at least the major component of the liquid phase. The total content of polymerisable monomers in the ink will usually be 50 to 95%, e.g. at least 70% and often at least 80%, by weight of the formulation.

Suitable photoinitiators, especially for free-radical curing, include 2-hydroxy-2-methyl-1-phenylpropan-1-one, acrylic ketones, 1-hydroxycyclohexyl phenyl ketone, 2-methyl-1-[4-(methylthio)phenyl]-2-morpholinylpropanone, 2,2-dimethoxy-1,2-diphenylethan-1-one, benzophenone, isopropylthioxanthone and p-phenylbenzophenone. A photoinitiator suitable for the cationic curing mechanism is a triarylsulphonium hexafluoroantimonate salt.

Suitable photoactivators and photosynergists include ethyl 4-(dimethylamino)benzoate,N-methyldiethanolamine and 2-ethylhexyl dimethylaminobenzoate. Such materials will generally be required only for free-radical curing.

The choice of colourant for a monomer-based ink-jet ink is important, but it is possible to produce either a dye-based monomer ink or a disperse pigmented monomer-based ink of the invention. The use of pigment can provide faster curing, reflecting faster printing and enhanced solvent resistance.

A range of colours can be achieved, including black. The problem with black UV curable inks is the strong absorbence of light preventing successful curing or polymerisation. A black ink of the invention may comprise a mixture of dyes of different colours, which allows UV light at a discrete wavelength to penetrate and to initiate polymerisation, to produce a black-coloured film.

Suitable colourants include carbon black pigment, titanium dioxide pigment, ink-jet dyes including metal azo complex dyestuffs and mixtures of coloured dyestuffs. The colourant may be present in dispersion, if necessary in the form of particles coated with a material, e.g. a polymer, that is compatible with the liquid phase components.

It has been found that not all conductive salts used in conventional ink-jet formulations are suitable for the purposes of this invention, since they may catalyse the breakdown of photoinitiator and initiate polymerisation. However, satisfactory polar salts have been identified, including potassium thiocyanate (most preferred). Other suitable conductive salts include lithium nitrate, lithium nitrate trihydrate, ammonium thiocyanate and dimethylamine hydrochloride.

Stabilisers such as triethanolamine have been shown to inhibit possible breakdown of photoinitiators. An example of another stabiliser that may be used is ethylene glycol. Conventional wetting agents may be included in the formulation, as may be industrial organic solvent-based surfactants.

More specifically, a general-purpose or solvent-resistant ink-jet ink that can be cured by a free-radical mechanism using a medium-pressure 150 mm (6-inch) mercury arc lamp operating at 12 W/mm (300 W/in) and at a wavelength of approx. 200-300 nm, or equivalent, comprises 0.5 to 5% conductive salt, 1 to 10% photoinitiator, 0.5% photoactivator, 0.05 to 5% colourant and 0 to 2% additive, the balance being up to 50% monofunctional monomer, up to 50% difunctional monomer and 0 to 10% trifunctional monomer (the percentages are by weight of the ink formulation).

A similar formulation, that cures under a UV-A light source (wavelength 315-400 nm) does not include photoactivator.

Another similar formulation, but without either photoactivator or trifunctional monomer, is curable by a cationic mechanism using the medium-pressure mercury arc lamp or equivalent (200-300 nm) or a UV-A light source.

Another general-purpose and solvent-resistant ink-jet ink, curable by a combination of cationic and free-radical mechanisms, using the medium-pressure mercury arc lamp or equivalent (200-300 nm), comprises 1 to 6% photoinitiator for free-radical polymerisation, 1 to 15% photoinitiator for cationic polymerisation, 0.5 to 5% conductive salt, 0.5 to 5% colourant and 0 to 2% additives, the balance comprising up to 30% of each of four types of monomer, i.e. mono- and di-functional monomers respectively curing by a free-radical or cationic mechanism.

In summary, the novel inks can provide the following advantages and characteristics, inter alia: solvent-free (no volatile solvents); non-inflammable; no change in viscosity due to solvent loss; no drying out; no solvent extraction or monitoring; low toxicity; low odour; solvent resistance to MilSpec 202F; general purpose coding and marking ink; fast cure times; high conductivity, i.e. at least 70 mΩ/mm; stable to elevated temperature, moisture and oxidation; stable to the presence of conductive salts; can be black; UV-A (or UV-B/UV-C) light-activated; no ozone production; viscosity less than 10, e.g. 5-6, cP at 25°C: allows fast continuous printing, e.g. at 1.5-2 m/sec.

The following Examples illustrate the invention. All amounts are given in parts by weight.

### Example 1

To 1600 parts N-vinyl-2-pyrrolidinone were added 60 parts KSCN and 160 parts 2,4,6-trimethylbenzoyl diphenylphosphine oxide, and mixed until dissolved. Hexanediol diacrylate (1000 parts) was added quickly, with stirring.

Separately, 200 parts of a pigment-in-polymer-in-monomer dispersion were prepared by dissolving 32 parts polyvinylbutyral in 128 parts N-vinyl-2-pyrrolidinone, adding 40 parts carbon black and, after pre-dispersion, bead-milling the dispersion to a particle size no greater than 1 »m. The mixture obtained above was added to this dispersion with stirring. The product was filtered, to remove particles greater than 1 »m in size. A homogeneous ink-jet ink that was curable under UV-A or UV-B or UV-C light was obtained.

### Example 2

To 1600 parts N-vinyl-2-pyrrolidinone were added 60 parts KSCN, and mixed until dissolved. The photoinitiator isopropylthioxanthone (40 parts) and the activator ethyl diaminobenzoate (120 parts) were then added, and mixed until dissolved. Hexanediol diacrylate (1000 parts) was added quickly, with stirring.

The mixture was added to 200 parts of the same pigment-in-polymer-in-monomer dispersion as in Example 1, with stirring. The product was filtered, to remove particles greater than 1 »m in size. A homogeneous ink-jet ink that was curable under UV-C light was obtained.

## Claims

1. An ink-jet ink comprising a colourant, a polar conductive component and, as a major component of the liquid phase, one or more polymerisable monomers in which the conductive component is soluble, and which is free of volatile organic solvent.

2. An ink according to claim 1, which comprises 50 to 95% by weight of polymerisable monomers.

3. An ink according to claim 1 or claim 2, which comprises, by weight thereof, up to 70% monofunctional monomer, up to 70% difunctional monomer, and 0 to 10% tri-or higher-functional monomer.

4. An ink according to claim 3, which comprises 25 to 60% by weight monofunctional monomer and 20 to 60% by weight difunctional monomer.

5. An ink according to any preceding claim, which is UV-A light-curable.

6. An ink according to any preceding claim, which comprises a photoinitiator and, optionally, a photoactivator.

7. An ink according to claim 6, which comprises 1 to 10% by weight photoinitiator and 0 to 5% by weight photoactivator.

8. An ink according to any preceding claim, which comprises 0.5 to 5% by weight of the conductive component.

9. An ink according to any preceding claim, wherein the conductive component is potassium thiocyanate.

10. An ink according to any preceding claim, which comprises 0.5 to 5% by weight of colourant.

11. An ink according to any preceding claim, wherein the colourant is black.

12. An ink according to any preceding claim, wherein the colourant is a dispersed pigment.

13. A method of printing a substrate by ink-jet printing, in which the ink-jet ink is as defined in any preceding claim.

## Patentansprüche

1. Tintenstrahltinte, die einen Farbstoff, einen polaren leitenden Bestandteil und - als Hauptbestandteil der flüssigen Phase - ein polymerisierbares Monomer oder mehrere polymerisierbare Monomere enthält, in denen der leitende Bestandteil löslich ist, und die frei von flüchtigen organischen Lösungsmitteln ist.

2. Tinte nach Anspruch 1, die 50 bis 95 Gew.-% polymerisierbare Monomere enthält.

3. Tinte nach Anspruch 1 oder 2, die folgende Gewichtsanteile enthält: bis zu 70 % monofunktionales Monomer, bis zu 70 % bifunktionales Monomer und 0 bis 10 % trifunktionales oder höher-funktionales Monomer.

4. Tinte nach Anspruch 3, die 25 bis 60 Gew.-% monofunktionales Monomer und 20 bis 60 Gew.-% bifunktionales Monomer enthält.

5. Tinte nach irgendeinem vorhergehenden Anspruch, die durch UV-A-Licht härtbar ist.

6. Tinte nach irgendeinem vorhergehenden Anspruch, die einen Photoinitiator und wahlweise einen Photoaktivator enthält.

7. Tinte nach Anspruch 6, die 1 bis 10 Gew.-% Photoinitiator und 0 bis 5 Gew.% Photoaktivator enthält.

8. Tinte nach irgendeinem vorhergehenden Anspruch, die 0,5 bis 5 Gew.-% von dem leitenden Bestandteil enthält.

9. Tinte nach irgendeinem vorhergehenden Anspruch, bei der der leitende Bestandteil Kaliumrhodanid ist.

10. Tinte nach irgendeinem vorhergehenden Anspruch, die 0,5 bis 5 Gew.-% des Farbstoffes enthält.

11. Tinte nach irgendeinem vorhergehenden Anspruch, bei der der Farbstoff schwarz ist.

12. Tinte nach irgendeinem vorhergehenden Anspruch, bei der der Farbstoff ein dispergiertes Pigment ist.

13. Verfahren zum Bedrucken eines Substrates im Tintenstrahldruck, bei dem die Tintenstrahltinte wie in irgendeinem vorhergehenden Anspruch definiert beschaffen ist.

## Revendications

1. Encre pour jet d'encre comprenant un colorant, un constituant conducteur polaire et, comme principal constituant de la phase liquide, un ou plusieurs monomères polymérisables dans lesquels le constituant conducteur est soluble, et qui est exempt de solvants organiques volatils.

2. Encre selon la revendication 1, qui comprend 50 à 95% en poids de monomères polymérisables.

3. Encre selon la revendication 1 ou la revendication 2, qui comprend, en poids, jusqu'à 70% de monomère monofonctionnel, jusqu'à 70% de monomère difonctionnel et 0 à 10% de monomère trifonctionnel ou plus.

4. Encre selon la revendication 3, qui comprend 25 à 60% en poids de monomère monofonctionnel et 20 à 60% en poids de monomère difonctionnel.

5. Encre selon l'une quelconque des revendications précédentes, qui est durcissable aux rayonnements UVA.

6. Encre selon l'une quelconque des revendications précédentes, qui comprend un photo-initiateur et, éventuellement, un photo-activateur.

7. Encre selon la revendication 6, qui comprend 1 à 10% en poids de photo-initiateur et 0 à 5% en poids de photo-activateur.

8. Encre selon l'une quelconque des revendications précédentes, qui comprend 0,5 à 5% en poids du constituant conducteur.

9. Encre selon l'une quelconque des revendications précédentes, dans laquelle le constituant conducteur est le thiocyanate de potassium.

10. Encre selon l'une quelconque des revendications précédentes, qui comprend 0,5 à 5% en poids de colorant.

11. Encre selon l'une quelconque des revendications précédentes, dans laquelle le colorant est noir.

12. Encre selon l'une quelconque des revendications précédentes, dans laquelle le colorant est un pigment dispersé.

13. Procédé d'impression d'un substrat par impression à jet d'encre, dans lequel l'encre à jet d'encre est telle que définie dans l'une quelconque des revendications précédentes.
